Europäisches Patentamt

European Patent Office

Office européen des brevets

(11) Numéro de publication : **0 506 508 A1**

# (12) DEMANDE DE BREVET EUROPEEN

(21) Numéro de dépôt : **92400679.4**

(22) Date de dépôt : **13.03.92**

(51) Int. Cl.$^5$ : **B60K 17/20**, B60K 17/35, F16H 3/66

(30) Priorité : **29.03.91 FR 9103910**

(43) Date de publication de la demande : **30.09.92 Bulletin 92/40**

(84) Etats contractants désignés : **DE ES FR GB IT**

(71) Demandeur : **GLAENZER SPICER**
**10 Rue J.P. Timbaud**
**F-78301 Poissy (FR)**

(72) Inventeur : **Van Dest, Jean Claude**
**27, Chemin du Renard**
**F-91250 Saintry Sur Seine (FR)**

(74) Mandataire : **Kohn, Philippe et al**
**c/o CABINET LAVOIX 2, place d'Estienne d'Orves**
**F-75441 Paris Cédex 09 (FR)**

(54) **Agencement pour l'entraînement en rotation de deux roues d'un même essieu avec régulation de leurs vitesses de rotation.**

(57) L'invention propose un agencement pour l'entraînement en rotation de deux arbres de transmission (18) d'un véhicule automobile routier reliés chacun à une roue d'un même essieu, caractérisé en ce que chacun des deux arbres de transmission (18) est relié au groupe motopropulseur (10) du véhicule par l'intermédiaire d'un dispositif (22) permettant un glissement variable entre son organe d'entrée (40) et son organe de sortie (36), et des moyens de pilotage des deux dispositifs à glissement variable (22) qui régulent les vitesses de rotation des deux arbres de transmission pour maintenir ces vitesses dans une plage déterminée de variation relative.

FIG.3

EP 0 506 508 A1

La présente invention concerne un agencement pour l'entraînement en rotation de deux arbres de transmission d'un véhicule automobile routier reliés chacun à une roue d'un même essieu.

L'invention concerne notamment un agencement permettant d'assurer une fonction de régulation du glissement de traction entre les deux roues d'un même essieu.

L'invention concerne un agencement de transmission qui trouve à s'appliquer tant aux véhicules à deux roues motrices du type à traction avant ou à propulsion, qu'aux véhicules à quatre roues motrices.

La plage de variation relative des vitesses entre les roues gauche et droite des essieux avant et arrière d'un véhicule automobile qui est requise pour assurer en toute sécurité l'avancement du véhicule automobile lors de ses diverses évolutions est faible, c'est-à-dire de l'ordre de 4 % de la vitesse maximale de rotation des roues.

La variation de vitesse entre les deux roues résulte en général du braquage de la direction. L'angle maximal de braquage dépend de la tenue de route et des conditions d'adhérence ainsi que des paramètres liés à la sécurité de conduite du véhicule et notamment de la visibilité dont découle la nécessité de prévoir une distance d'arrêt suffisante.

Cet angle maximal de braquage diminue en fonction de la vitesse d'avancement du véhicule.

La conception connue la plus générale d'un dispositif de répartition de la traction entre les roues gauche et droite d'un même essieu d'un véhicule automobile consiste en un différentiel au moyen duquel les deux arbres de transmission sont reliés mécaniquement entre eux et qui répartit le couple de traction entre les roues gauche et droite selon un rapport de répartition qui est déterminé structurellement. Il est également connu de prévoir un dispositif permettant de modifier temporairement le rapport de répartition.

L'invention a pour but de proposer un agencement qui permet d'effectuer la répartition de la traction entre les deux roues, non plus à partir d'une répartition des couples, mais à partir d'une régulation des vitesses.

Dans ce but l'invention propose un agencement du type mentionné plus haut, caractérisé en ce que chacun des deux arbres de transmission est relié au groupe motopropulseur du véhicule par l'intermédiaire d'un dispositif permettant un glissement variable entre son organe d'entrée et son organe de sortie, et des moyens de pilotage de chacun des deux dispositifs à glissement variable qui régulent les vitesses de rotation des deux arbres de transmission pour maintenir ces vitesses dans une plage déterminée de variation relative.

Selon d'autres caractéristiques de l'invention :
– chacun des deux arbres de transmission est associé à un train épicycloïdal dont un premier élément est relié au groupe motopropulseur et dont un deuxième élément est relié d'une part directement à l'arbre de transmission et, d'autre part, au troisième élément du train épicycloïdal par l'intermédiaire du dispositif à glissement variable ;
– chacun des dispositifs à glissement variable est un système passif ;
– chacun des dispositifs à glissement variable est un système actif ;
– la plage de variation relative des vitesses est comprise entre 0 et 10 % de la vitesse maximale de rotation des deux arbres de transmission.

D'autres caractéristiques et avantages de l'invention apparaîtront à la lecture de la description détaillée qui va suivre pour la compréhension de laquelle on se reportera aux dessins annexés pour lesquels :
– La figure 1 est un diagramme qui illustre l'angle de braquage d'un véhicule automobile en fonction de la vitesse de rotation des roues ;
– la figure 2 est une courbe qui illustre la variation du produit de l'angle de braquage par la vitesse de rotation moyenne des roues en fonction de cette vitesse ;
– la figure 3 est une représentation schématique qui illustre un mode de réalisation d'un agencement de transmission conforme aux enseignements de l'invention; et
– les figures 4 et 5 sont deux schémas illustrant des dispositions préférentielles du dispositif de glissement variable en association avec un train épicycloïdal.

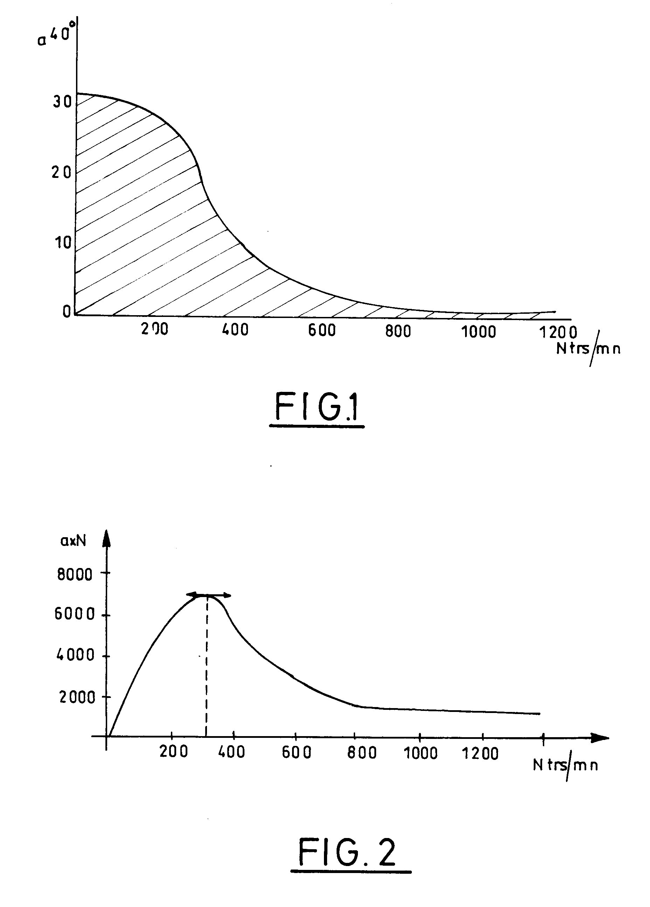

La courbe C illustrée à la figure 1 est le résultat d'une série de mesures effectuées sur un véhicule automobile routier et qui représente l'angle de braquage "a" exprimé en degrés, en fonction de la vitesse de rotation moyenne N des roues exprimée en tours/minute.

La zone hachurée correspond au domaine d'utilisation normal du véhicule.

A partir des données illustrées à la figure 1, il est possible d'établir la courbe de la figure 2 qui représente l'évolution du produit a x N en fonction de la vitesse de rotation moyenne des roues du véhicule.

On constate que le produit de l'angle de braquage "a" par la vitesse moyenne N passe par un maximum qui correspond à une vitesse moyenne de rotation comprise entre 200 et 400 tours/minute.

Pour ce maximum du produit a x N, la différence entre les vitesses de rotation des roues gauche et droite du même essieu est également maximale et est de l'ordre de 60 tours/minute pour un véhicule automobile routier dont l'empattement serait d'environ 4 mètres et la voie d'environ 2 mètres.

Par ailleurs, pendant la plus grande partie du temps d'utilisation d'un véhicule routier correspondant à son évolution normale sur route, la valeur des couples transmis aux roues est faible. La combinaison de cette constatation avec la faible variation des vitesses relatives entre les roues gauche et droite, permet de conclure que la puissance requise pour assurer le contrôle de l'évolution du véhicule est en moyenne faible et de l'ordre de 2 à 3 % de la puissance maximale du véhicule.

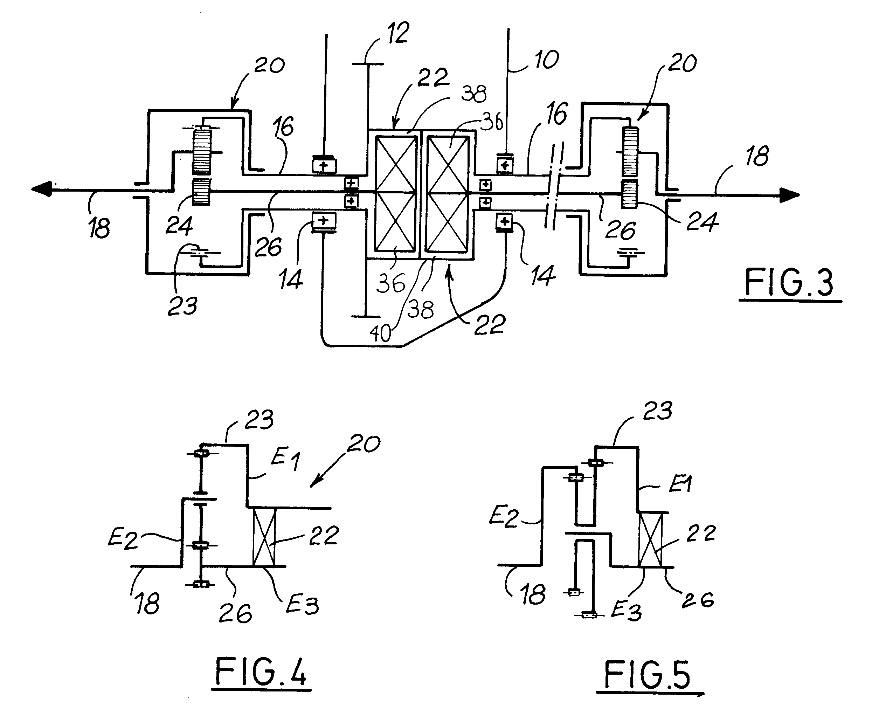

L'invention propose un agencement pour l'entraînement en rotation des deux roues d'un même essieu dont un mode de réalisation est illustré à la figure 3.

On a représenté à la figure 3 de manière schématique une portion 10 d'un carter du groupe motopropulseur du véhicule.

Une couronne dentée 12, qui reçoit le mouvement de sortie de la boîte de vitesses, est montée à rotation par des paliers 14 dans le carter 10.

La couronne dentée 12 entraîne directement deux arbres tubulaires creux 16.

Chacun des arbres 16 a pour fonction d'entraîner en rotation une des deux roues (non représentées) d'un même essieu du véhicule.

La transmission de puissance entre le groupe motopropulseur du véhicule et chacune des roues est réalisée conformément aux enseignements de l'invention.

On décrira maintenant l'agencement de transmission en se référant à la partie gauche de la figure 3, la partie droite étant d'une conception symétrique pour l'entraînement de l'autre roue.

La liaison entre l'arbre 16 et l'arbre de transmission 18 qui est lui-même relié à une roue du véhicule, est assurée au moyen d'un train épicycloïdal 20 et d'un dispositif à glissement limité 22.

L'arbre tubulaire creux 16 se prolonge axialement pour constituer la couronne extérieure 23 du train épicycloïdal 20.

Le planétaire 24 du train épicycloïdal est relié à un arbre d'entraînement 26 coaxial à l'arbre 16. L'arbre 26 est lui-même relié à la sortie du dispositif à glissement variable 22.

L'organe à glissement variable 22 est ici un organe passif du type pompe hydraulique à palettes comportant un rotor à palettes 36 qui tourne dans une chambre 38 formée dans un carter 40 qui est lié en rotation à la couronne 12.

Le carter 40 est ici commun aux deux dispositifs 22.

Le dispositif à glissement limité 22 permet donc un glissement relatif en rotation de l'arbre 26 par rapport à la couronne 12, c'est-à-dire un glissement relatif en rotation entre le planétaire et la couronne extérieure du train épicycloïdal.

Des moyens non représentés de pilotage de chacun des deux dispositifs à glissement variable ont pour fonction de réguler les vitesses de rotation des deux arbres de transmission 18 pour les maintenir dans la plage déterminée de variation relative de ces vitesses de rotation.

Le pilotage des deux dispositifs 22 peut être assuré par un dispositif du type limiteur de débit de la pompe, commandé par une unité électronique de régulation.

Le fonctionnement de l'agencement de transmission est le suivant.

Lorsque le véhicule avance en ligne droite, et quelle que soit sa vitesse d'avancement, les deux roues d'un même essieu tournent sensiblement à la même vitesse. La répartition du couple entre les deux roues s'effectue automatiquement par l'intermédiaire des dispositifs pilotés à glissement variable 22.

Lorsque le véhicule évolue en courbe, les vitesses de rotation des deux roues sont adaptées instantanément en fonction de la valeur du braquage imposé au véhicule, c'est-à-dire en fonction du rayon de courbure, sans qu'aucun couple parasite ne soit transmis à la direction du véhicule. Cette adaptation s'effectue dans les limites imposées par le dispositif de pilotage de chacun des des deux dispositifs à glissement variable 22.

En cas de perte d'adhérence de l'une des deux roues, que ce phénomène se produise en ligne droite ou en courbe, cette roue ne peut patiner que dans la proportion correspondant à la limite permise par le dispositif de pilotage des dispositifs 22.

De plus, lors de la phase temporaire de patinage, le couple continue à être transmis à l'autre roue.

Dans le mode de réalisation illustré à la figure 3, les dispositifs 22 sont des dispositifs passifs, c'est-à-dire des dispositifs ne nécessitant aucune introduction de puissance autre que la puissance d'entraînement du véhicule. Un tel dispositif à glissement variable passif est par exemple constitué par une pompe hydraulique, un compresseur, un dispositif "viscodrive", un coupleur hydraulique à disques multiples, etc.

Il est également possible de prévoir des dispositifs à glissement variable 22 du type actif, c'est-à-dire dans lesquels on introduit une puissance supplémentaire. Un dispositif actif est dans ce cas par exemple constitué par un moteur hydraulique ou électrique.

Les schémas des figures 4 et 5 illustrent deux exemples d'association d'un dispositif à glissement variable 22 avec un train épicycloïdal 20.

Compte tenu de la faible valeur de la différence entre les vitesses des roues gauche et droite, et de la faible valeur de la puissance requise pour la régulation des vitesses, on peut utiliser des trains épicycloïdaux du type illustré aux figures 4 et 5 dans lesquels les rapports E3/E1 et E3/E2 sont petits.

L'agencement de transmission selon l'invention qui comporte des dispositifs à glissement variable permet, outre sa fonction de régulation du glissement de traction, d'assurer une conduite du type à boîte de vitesses automatique pour les rapports de rang inférieur, et notamment pour le premier rapport.

L'agencement selon l'invention avec ses moyens de pilotage peut en effet permettre au conducteur de contrôler l'avancement du véhicule à faible vitesse et son maintien au point fixe directement à partir de l'accélérateur.

L'interposition entre les deux ensembles constitués par le groupe motopropulseur et le train roulant du véhicule, qui ont chacun une inertie importante, de l'agencement selon l'invention, dont l'inertie est faible, permet également d'assurer une fonction d'amortissement torsionnelle dans la transmission.

Dans le cas d'un véhicule à quatre roues motrices, l'utilisation d'au moins un agencement selon l'invention pour la transmission aux deux roues motrices de l'un des essieux moteurs du véhicule permet également d'assurer une fonction de répartition du couple entre les deux essieux.

## Revendications

1. Agencement pour l'entraînement en rotation de deux arbres de transmission (18) d'un véhicule automobile routier reliés chacun à une roue d'un même essieu, caractérisé en ce que chacun des deux arbres de transmission (18) est relié au groupe motopropulseur (10) du véhicule par l'intermédiaire d'un dispositif (22) permettant un glissement en rotation variable entre son organe d'entrée (40) et son organe de sortie (36), et des moyens de pilotage de chacun des deux dispositifs à glissement variable (22) qui régulent les vitesses de rotation des deux arbres de transmission pour maintenir ces vitesses dans une plage déterminée de variation relative.

2. Agencement selon la revendication 1, caractérisé en ce que chacun des deux arbres de transmission (18) est associé à un train épicycloïdal (20) dont un premier élément (24) est relié au groupe motopropulseur et dont un deuxième élément est relié d'une part directement à l'arbre de transmission (18) et, d'autre part, au troisième élément (23) du train épicycloïdal par l'intermédiaire du dispositif à glissement variable (22).

3. Agencement selon l'une des revendications 1 ou 2, caractérisé en ce que chacun des dispositifs à glissement variable (22) est un système passif.

4. Agencement selon l'une des revendications 1 ou 2, caractérisé en ce que chacun des dispositifs à glissement variable (22) est un système actif.

5. Agencement selon l'une quelconque des revendications précédentes, caractérisé en ce que ladite plage de variation des vitesses est comprise entre 0 et 10 % de la vitesse maximale de rotation des deux arbres de transmission (18).

## FIG.1

## FIG. 2

FIG.3

FIG.4

FIG.5

EP 0 506 508 A1

**Office européen des brevets**

# RAPPORT DE RECHERCHE EUROPEENNE

Numero de la demande

EP 92 40 0679

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 337 356 (TOCHIGIFUJISANGYO K.K.) | 1,3 | B60K17/20 |
| Y | * le document en entier * | 2,4 | B60K17/35 |
| | --- | | F16H3/66 |
| X | DE-A-3 820 064 (B.HARTWIG) | 1,4 | |
| Y | * le document en entier * | 2 | |
| | --- | | |
| Y | GB-A-2 122 146 (NEWAGE TRANSMISSIONS LTD.) | 2 | |
| | * le document en entier * | | |
| | --- | | |
| Y | FR-A-881 038 (KRUPP AG) | 2 | |
| | * le document en entier * | | |
| | --- | | |
| Y | EP-A-0 283 389 (AUTOMOBILES PEUGEOT) | 4 | |
| | * colonne 3, ligne 63 - colonne 4, ligne 10 * | | |
| | * abrégé; figures 2,3 * | | |
| | --- | | |
| A | GB-A-2 212 230 (VISCODRIVE) | 1 | |
| | * page 13, ligne 29 - page 15, ligne 7; figure 3 * | | |
| | ----- | | **DOMAINES TECHNIQUES RECHERCHES (Int. Cl.5)** |
| | | | B60K |
| | | | F16H |

Le présent rapport a été établi pour toutes les revendications

| Lieu de la recherche | Date d'achèvement de la recherche | Examinateur |
|---|---|---|
| LA HAYE | 22 JUIN 1992 | TOPP-BORN S. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..........................................................................
& : membre de la même famille, document correspondant

EPO FORM 1503 03.82 (P0402)

7